(19) Europäisches Patentamt / European Patent Office / Office européen des brevets

(11) **EP 4 741 872 A1**

(12) **EUROPÄISCHE PATENTANMELDUNG**

(43) Veröffentlichungstag:
**13.05.2026 Patentblatt 2026/20**

(21) Anmeldenummer: 25209445.3

(22) Anmeldetag: **17.10.2025**

(51) Internationale Patentklassifikation (IPC):
**G01S 7/48** *(2006.01)* **G01S 7/487** *(2006.01)*
**G01S 7/497** *(2006.01)*

(52) Gemeinsame Patentklassifikation (CPC):
**G01S 7/497; G01S 7/4802; G01S 7/4876;
G01S 17/931**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **08.11.2024 DE 102024132666**

(71) Anmelder: **SICK AG
79183 Waldkirch (DE)**

(72) Erfinder: **KINGSTON, Michael
79183 Waldkirch (DE)**

(74) Vertreter: **Manitz Finsterwald
Patent- und Rechtsanwaltspartnerschaft mbB
Martin-Greif-Straße 1
80336 München (DE)**

(54) **OPTOELEKTRONISCHER SENSOR ZUR ERFASSUNG VON OBJEKTEN IN EINEM ÜBERWACHUNGSBEREICH**

(57) Die Erfindung betrifft einen optoelektronischen Sensor, insbesondere eine Timeof-Flight-Kamera oder einen LiDAR-Sensor, zur Erfassung von zumindest einem Objekt in einem Überwachungsbereich, wobei der optoelektronische Sensor einen Lichtsender, einen Lichtempfänger und eine Auswertungseinheit umfasst. Der Lichtsender ist dazu ausgebildet, Sendelicht in den Überwachungsbereich auszusenden. Der Lichtempfänger ist dazu ausgebildet, von dem Überwachungsbereich remittiertes Empfangslicht zu empfangen. Die Auswertungseinheit ist dazu ausgebildet, basierend auf dem Empfangslicht Abstandsdaten über den Überwachungsbereich zu gewinnen, wobei die Abstandsdaten Intensitätswerte und zugehörige Abstandswerte umfassen, für alle diejenigen Datenanteile in den Abstandsdaten, die nicht von dem Objekt stammen, und insbesondere für alle diejenigen Datenanteile, deren Intensitätswert kleiner ist als ein erster Intensitätsgrenzwert, jeweils anhand der Abstandsdaten einen Abstand zu dem Objekt, insbesondere zu dem Rand des Objekts, zu ermitteln, und jeweils anhand des ermittelten Abstands des betreffenden Datenanteils zu dem Objekt, anhand eines Modells für das Streulichtverhalten des optoelektronischen Sensor und anhand des Intensitätswertes des betreffenden Datenanteils einen Wahrscheinlichkeitswert zu ermitteln, dass der betreffende Datenanteil eine Störung darstellt, und alle diejenigen Datenanteile als Störung zu erkennen, deren ermittelter Wahrscheinlichkeitswert gleich oder größer ist als ein Wahrscheinlichkeitsgrenzwert.

EP 4 741 872 A1

**Beschreibung**

Die Erfindung betrifft einen optoelektronischen Sensor, insbesondere eine Time-of-Flight-Kamera oder einen LiDAR-Sensor, zur Erfassung von zumindest einem Objekt in einem Überwachungsbereich, wobei der optoelektronische Sensor Mittel umfasst, Datenanteile in gewonnenen Abstandsdaten über den Überwachungsbereich als Störungen zu erkennen.

Optoelektronische Sensoren können für industrielle Sicherheitsanwendungen eingesetzt werden und können eine sichere Umgebungswahrnehmung eines Überwachungsbereichs, und insbesondere eine sichere dreidimensionale Umgebungswahrnehmung des Überwachungsbereichs, erlauben, wodurch die Sicherheit und Effizienz industrieller Prozesse in Industrieanlagen erhöht werden können. Beispiele für solche optoelektronischen Sensoren sind ToF (Time-of-Flight)-Kameras und LiDAR (Light Detection And Ranging)-Sensoren. Optoelektronische Sensoren können beispielsweise stationär in der Industrieanlage oder an Robotern angebracht sein, die sich autonom in der Industrieanlage bewegen können. Mit einer Industrieanlage kann beispielsweise eine Produktionshalle, eine Lagerhalle, ein Kraftwerk, eine Anlage der chemischen Industrie, eine Anlage der Nahrungsmittelindustrie oder eine Anlage der Tierhaltung gemeint sein. In der Industrieanlage können Reflektoren, insbesondere Retroreflektoren, angebracht sein, die als Hindernismarkierung/- hervorhebung und/oder Navigationsmerkmal dienen können und von optoelektronischen Sensoren auf autonomen mobilen Robotern (z.B. AGVs - Autonomous Guided Vehicles) zur Steuerung, Lokalisierung und/oder Navigation der Roboter verwendet werden können.

Wenn sich stark remittierende (insbesondere reflektierende) Objekte im Überwachungsbereich befinden, wie z.B. Reflektoren und insbesondere Retroreflektoren, Warnwesten, metallische oder spiegelnde Objekte, kann das Empfangslicht in typischen Empfangsobjektiven von optoelektronischen Sensoren teilweise an Linsenkanten und/oder anderen optischen Elementen gestreut werden. Dies kann insbesondere bei optoelektronischen Sensoren auftreten, die eine Umgebung simultan und daher nicht in Einzelmessungen abtasten. Das Streulicht kann, insbesondere vor einem nur schwach remittierenden oder weit entfernten Hintergrund, als Bildstörungen um das Objekt auftreten und zu verfälschten Abstandsmessungen führen. Die Bildstörungen können in unerwünschter Weise ein im optoelektronischen Sensor konfiguriertes Warn- oder Schutzfeld auslösen, und damit unnötigerweise einen Sicherheitsstopp eines autonomen Roboters verursachen. Dies verringert die Verfügbarkeit der Roboter in ihrer bestimmungsgemäßen Verwendung und/oder kann den optoelektronischen Sensor für den Einsatz in der Industrieanlage sogar gänzlich unbrauchbar machen, da diese wiederholt an den gleichen Positionen in der Industrieanlage (d.h. in der Nähe der Retroreflektoren) einen Sicherheitsstopp der Roboter auslösen.

Bekannte optoelektronische Sensoren versuchen die Entstehung von Bildstörungen durch Verwendung von Empfangsobjektiven, welche weniger interne Reflexionen aufweisen, zu bewältigen oder zu vermeiden. Solche Empfangsobjektive sind jedoch aufwändig, teuer, schwer realisierbar und/oder können womöglich trotzdem nur eingeschränkt das Auftreten von Bildstörungen verhindern. Andere bekannte optoelektronische Sensoren verringern die Intensität des Sendelichts. Mit einer Verringerung des Sendelichts gehen jedoch meist eine Reduzierung der Reichweite, eine Reduzierung des Sichtfelds, Detektionsverluste und/oder Genauigkeitsverluste einher.

Der Erfindung liegt die Aufgabe zugrunde, einen verbesserten optoelektronischen Sensor bereitzustellen, insbesondere im Hinblick auf die Erkennung von Bildstörungen.

Zur Lösung der Aufgabe ist ein optoelektronischer Sensor mit den Merkmalen des Anspruchs 1 vorgesehen.

Der erfindungsgemäße optoelektronische Sensor, insbesondere eine Time-of-Flight-Kamera oder ein LiDAR-Sensor, zur Erfassung von zumindest einem Objekt in einem Überwachungsbereich, insbesondere für die Navigation eines Fahrzeugs, umfasst einen Lichtsender, einen Lichtempfänger und eine Auswertungseinheit. Der Lichtsender ist dazu ausgebildet, Sendelicht in den Überwachungsbereich auszusenden. Der Lichtempfänger ist dazu ausgebildet, von dem Überwachungsbereich remittiertes Empfangslicht zu empfangen. Die Auswertungseinheit ist dazu ausgebildet, basierend auf dem Empfangslicht Abstandsdaten über den Überwachungsbereich zu gewinnen, wobei die Abstandsdaten Intensitätswerte und zugehörige Abstandswerte umfassen. Die Auswertungseinheit ist ferner dazu ausgebildet, für alle diejenigen Datenanteile (z.B. Bildpunkte oder Pixel) in den Abstandsdaten, die nicht von dem Objekt stammen, und insbesondere für alle diejenigen Datenanteile in den Abstandsdaten, deren (gewonnener) Intensitätswert kleiner ist als ein (vorbestimmter) erster Intensitätsgrenzwert, jeweils anhand der Abstandsdaten einen Abstand zu dem Objekt, insbesondere zu dem Rand des Objekts, zu ermitteln und jeweils anhand des ermittelten Abstands des betreffenden Datenanteils zu dem Objekt, anhand eines Modells für das Streulichtverhalten des optoelektronischen Sensors und anhand des Intensitätswertes des betreffenden Datenanteils einen Wahrscheinlichkeitswert zu ermitteln, dass der betreffende Datenanteil eine Störung darstellt. Die Auswertungseinheit ist ferner dazu ausgebildet, alle diejenigen Datenanteile als Störung zu erkennen, deren ermittelter Wahrscheinlichkeitswert gleich oder größer ist als ein (vorbestimmter) Wahrscheinlichkeitsgrenzwert.

Der Erfindung liegt mit anderen Worten die Erkenntnis zugrunde, dass für alle Datenanteile in den Abstandsdaten, die nicht von einem (stark) remittierenden Objekt (wie beispielsweise einem Reflektor und insbesondere Retroreflektor) stammen, jeweils anhand ihres Abstands zu dem Objekt, insbesondere zu dem Rand des Objekts, ihres Intensitätswertes und eines kalibrierten oder simulierten Streulichtmodells ein Wahrscheinlichkeitswert dafür ermittelt werden kann, dass der jeweilige Datenanteil eine Störung darstellt. Auf Basis dieser ermittelten Wahrscheinlichkeitswerte, die im Gesamtzusammenhang für alle Datenanteile auch als Wahrscheinlichkeitsmaske oder - karte bezeichnet werden können, können diejenigen Datenanteile in den Abstandsdaten, die mit einer gewissen Wahrscheinlichkeit eine Störung darstellen, erkannt und herausgefiltert werden.

Die Datenanteile in den Abstandsdaten, die nicht von dem Objekt stammen, können durch gängige Algorithmen zur Bildsegmentierung, und insbesondere Machine-Learning-Algorithmen, erkannt werden. Insbesondere kann zunutze gemacht werden, dass die Störungen durch Streulicht meist eine niedrigere Intensität aufweisen als das remittierende Objekt selbst. Zusätzlich oder alternativ können die Datenanteile in den Abstandsdaten, die nicht von dem Objekt stammen, daher durch Filterung mittels einem (ersten) Intensitätsgrenzwert erkannt (und segmentiert) werden. Für alle Datenanteile in den Abstandsdaten, deren Intensitätswert unterhalb eines (ersten) Intensitätsgrenzwertes fällt, die also nicht von dem Objekt stammen, kann (einzeln) anhand des Streulichtmodells ein Wahrscheinlichkeitswert dafür ermittelt werden, dass der jeweilige Datenanteil eine Störung darstellt. Auf Basis dieser ermittelten Wahrscheinlichkeitswerte können die Datenanteile, die eine Störung darstellen, herausgefiltert werden.

Bei einer Filterung der Abstandsdaten stellt sich die Schwierigkeit, dass oft schwer erkennbar ist, ob Messdaten valide sind (und beispielsweise lediglich von einer dunklen Szene stammen) oder ob die Messdaten tatsächlich eine Störung darstellen. Dies ist insbesondere für sicherheitsgerichtete Anwendungen relevant, da hier aus Gründen der funktionalen Sicherheit möglichst alle Messdaten beibehalten werden müssen, die nicht zuverlässig als Fehlmessung bzw. Störung identifiziert werden können. Herkömmliche Filter werden dabei oft umso ineffizienter, je näher ein Bildpunkt in den Abstandsdaten bei einem stark remittierenden Objekt liegt. Zudem können die Störungen umso ausgeprägter sein, je größer das stark remittierende Objekt in dem Überwachungsbereich ist. Der erfindungsgemäße optoelektronische Sensor mit der auf dem Wahrscheinlichkeitsgrenzwert basierten Filterung kann im Hinblick auf die Erkennung von Bildstörungen, insbesondere bei der Anwesenheit eines stark remittierenden Objekts in dem Überwachungsbereich, effizienter und/oder zuverlässiger sein.

Das Modell für das Streulichtverhalten des optoelektronischen Sensors kann mittels einer Kalibrierung mit realen Messdaten kalibriert, erstellt oder hergeleitet werden. Das Streulichtverhalten des optoelektronischen Sensors kann im Zusammenspiel mit dem Objekt in dem Überwachungsbereich (z.B. einem Retroreflektor) bekannt sein. In anderen Worten kann festgelegt sein, dass sich nur bestimmte stark remittierende Objekte, insbesondere Retroreflektoren, in dem Überwachungsbereich befinden. Durch Aufnahme von Abstandsdaten über den Überwachungsbereich mit und ohne Objekt kann dann ein Modell für das Streulichtverhalten kalibriert, erstellt oder hergeleitet werden. Zusätzlich oder alternativ kann das Modell mittels einer Simulation kalibriert, erstellt oder hergeleitet werden. Denkbar ist auch, dass das Modell mittels eines Machine-Learning-Algorithmus kalibriert, erstellt oder hergeleitet wird. Anhand des so kalibrierten, erstellten oder hergeleiteten Modells für das Streulichtverhalten kann beispielsweise abhängig von der Objektposition und -größe in den Abstandsdaten eine erwartete Intensitätsabweichung je Datenanteil, z.B. je Bildpunkt, berechnet werden. Wenn das Modell für das Streulichtverhalten des optoelektronischen Sensors in Bezug auf einen optoelektronischen Sensor kalibriert, erstellt oder hergeleitet ist, kann dieses auch auf andere optoelektronische Sensoren mit baugleichen oder ähnlichen Empfangsobjektiven übertragen werden. Der Prozess der Kalibrierung kann mithilfe von Apparaturen, die das Objekt in dem Überwachungsbereich umpositionieren, automatisiert werden.

Der Abstandswert eines Datenanteils in den Abstandsdaten kann einem Abstand oder einer Distanz gemessen in Metern zwischen dem Überwachungsbereich (bzw. einem Objekt in dem Überwachungsbereich) und dem optoelektronischen Sensor entsprechen. Der Abstand des Datenanteils zu dem Objekt (bzw. dem Rand des Objekts) kann einem Abstand oder einer Distanz bemessen in Pixel oder in Bildpunkten (auf dem Sensor) entsprechen oder zu einem Abstand in Meter umgerechnet sein.

Der erste Intensitätsgrenzwert kann beispielsweise einen Wert einer willkürlichen Einheit, zum Beispiel 20000 AU oder 20000 digits, haben. Die Datenanteile in den Abstandsdaten über das Objekt können dann Intensitätswerte haben, die gleich oder größer als der erste Intensitätsgrenzwert sind. Der erste Intensitätsgrenzwert kann dem Wert der mit dem optoelektronischen Sensor maximal messbaren Intensität entsprechen. In diesem Fall können die Intensitätswerte in den Abstandsdaten des Objekts den Wert des ersten Intensitätsgrenzwertes annehmen und als "übersteuert" bezeichnet werden.

Der erste Intensitätsgrenzwert kann einem prozentualen Anteil der mit dem optoelektronischen Sensor maximal messbaren Intensität entsprechen, und beispielsweise 50%, bevorzugt 60%, bevorzugt 70%, bevorzugt 80%, bevorzugt 90%, bevorzugt 95%, bevorzugt 99% und noch weiter bevorzugt 100% (d.h. dem Sättigungswert) der maximal messbaren Intensität entsprechen.

Der Wahrscheinlichkeitsgrenzwert kann beispielsweise bei 50% (bzw. 0,5), bevorzugt bei 60%, bevorzugt bei 70%, bevorzugt bei 80%, bevorzugt bei 90%, und noch weiter bevorzugt bei 95% liegen. Der Wahrscheinlichkeitsgrenzwert kann vorzugsweise gleich oder größer als 0,5 und kleiner oder gleich 0,7 sein.

Es versteht sich, dass die Auswertungseinheit ein Teil des optoelektronischen Sensors sein kann oder aber auch eine externe Recheneinheit, z.B. ein Server, mit dem der optoelektronische Sensor in (kabelloser oder kabelgebundener) Signalverbindung steht.

Der optoelektronische Sensor ist vorzugsweise ein sicherer Sensor, also ein Sicherheitssensor, und insbesondere eine Sicherheits-ToF-Kamera oder ein Sicherheits-LiDAR-Sensor. Dabei können die Begriffe sicher oder Sicherheit im Sinne von sicherheitsspezifischen Normen wie beispielsweise Norm DIN EN ISO 13849 oder DIN EN 61508 verstanden werden. Der optoelektronische Sensor kann also erlauben, Fehler bis zu einem bestimmten Sicherheitsniveau zu beherrschen.

Das Sendelicht wird von dem Objekt (und auch von anderen Gegenständen) im Überwachungsbereich als Empfangslicht remittiert.

Gemäß einer Ausführungsform umfasst das Objekt einen Reflektor (z.B. einen Retroreflektor). Insbesondere kann das Objekt ein Reflektor, und bevorzugt ein Retroreflektor, sein. Der Retroreflektor kann vorzugsweise das Sendelicht unabhängig vom Einfallswinkel zum Lichtsender zurückwerfen. Der Retroreflektor kann eine Vielzahl an kleinen Winkel- bzw. Halbkugel-Spiegel umfassen, die das Licht mit einer kleinen Streuung von vorzugsweise wenigen Grad in die Richtung des Lichtsenders zurückwerfen können. Der Reflektor kann eine Remission von gleich oder größer als 80%, bevorzugt gleich oder größer als 85%, bevorzugt gleich oder größer als 90%, bevorzugt gleich oder größer als 95%, und bevorzugt gleich oder größer als 99 % aufweisen. Die Intensitätswerte des Reflektors in den Abstandsdaten können (unabhängig vom Abstand des Reflektors zu dem optoelektronischen Sensor) den maximal messbaren Intensitätswert aufweisen, also (immer) übersteuert sein. Der Reflektor, insbesondere Retroreflektor, kann in der Industrieanlage zum Zweck der Steuerung, Lokalisierung und/oder Navigation von autonomen Robotern angebracht sein. Es kann festgelegt sein, dass sich nur bestimmte Reflektoren, insbesondere Retroreflektoren, in dem Überwachungsbereich befinden.

Die Auswertungseinheit kann dazu ausgebildet sein, anhand der Abstandsdaten Remissionswerte zu ermitteln, wobei die Remissionswerte anhand der gewonnenen Intensitätswerte und Abstandswerte geschätzt werden können bzw. anhand der gewonnenen Intensitätswerte und Abstandswerte berechnet werden können. Der jeweilige Remissionswert kann beispielsweise proportional sein zu dem gewonnenen Intensitätswert multipliziert mit dem gewonnen Abstandswert (in Meter) zum Quadrat (Remissionswert ~ Intensitätswert * Abstandswert * Abstandswert). Die Remission kann im Allgemeinen eine "Reflektivität der betrachteten Oberfläche" anhand der gemessenen Intensität eines Objekts und desgemessenen Abstands abschätzen. In anderen Worten kann eine Schätzung der Materialeigenschaften der betrachteten Oberflächen (bzw. Objekte), wie die optoelektronische Sensor sie erkennt, angegeben werden. Zusätzlich können die Remissionswerte mit der Intensität des Sendelichts normiert werden.

Gemäß einer Ausführungsform umfassen die Abstandsdaten eine Vielzahl an Bildpunkten mit jeweils einem Intensitätswert und einem zugehörigen Abstandswert.

Gemäß einer Ausführungsform ist die Auswertungseinheit dazu ausgebildet, anhand der Abstandsdaten einen Abstand, eine Größe, eine Remission und/oder eine Intensität des remittierenden Objekts zu ermitteln. Mit dem Abstand des Objekts kann hier ein Abstand zwischen dem Objekt und dem optoelektronischen Sensor gemeint sein.

Gemäß einer Ausführungsform wird der Wahrscheinlichkeitswert $P_{BP}$, dass der betreffende Datenanteil eine Störung darstellt, anhand folgender Gleichung 1 ermittelt,

[Gleichung 1]

$$P_{BP} \sim \frac{F(x_{BP})}{I_{BP}},$$

wobei $I_{BP}$ der gemessenen Intensitätswert des betreffenden Datenanteils, $x_{Bp}$ der Abstand oder die Distanz (zum Beispiel bemessen in Pixel) des betreffenden Datenanteils zu dem Objekt, insbesondere zu dem Rand des Objekts, und $F(x_{BP})$ ein anhand des Modells $F$ für das Streulichtverhalten in Abhängigkeit von $x_{BP}$ ermittelter Streulichtwert ist. In anderen Worten kann $I_{BP}$ beispielsweise der Summe eines von dem Überwachungsbereichs ohne das Objekt stammenden Grundintensitätswertes $I_{NoObj}$ und eines von dem Objekt stammenden Intensitätswertes $I_{Obj}$ entsprechen, wobei $F(x_{BP})$ dem Intensitätswert $I_{Obj}$ von dem Objekt entsprechen kann. Der Wahrscheinlichkeitswert $P_{BP}$ kann dann auch abhängig sein von oder dem Wert 1 minus das Verhältnis von $I_{NoObj}$ zu $I_{BP}$ (also $1 - I_{NoObj} / I_{BP}$) entsprechen. Auch wenn $I_{NoObj}$ nicht unbedingt bekannt ist, so kann trotzdem bekannt sein, dass sich das Verhältnis von $I_{NoObj}$ zu $I_{BP}$ mit einem Objekt ändert. Ist beispielsweise $I_{NoObj}$ sehr ähnlich zu $I_{BP}$ oder mit diesem identisch (es befindet sich also kein Objekt in dem Überwachungsbereich), geht $P_{BP}$ gegen den Wert Null. Sollte der Grundintensitätswert $I_{NoObj}$ gegen den Wert Null gehen, so geht $P_{BP}$ gegen den Wert 1. Je näher der Datenanteil also bei dem Objekt liegt, umso wahrscheinlicher stellt er eine Störung dar. Ein höherer Grundintensitätswert $I_{NoObj}$ kann zu einer geringeren Wahrscheinlichkeit führen, dass der betreffende Datenanteil eine Störung darstellt und/oder dass das Objekt Störungen produziert.

Gemäß einer Ausführungsform ist die Auswertungseinheit dazu ausgebildet, den Wahrscheinlichkeitswert, dass der betreffende Datenanteil eine Störung darstellt, in Abhängigkeit von dem ermittelten Abstand des betreffenden Datenanteils zu dem Objekt (insbesondere zu dem Rand des Objekts), dem Intensitätswert des betreffenden Datenanteils, der maximal messbaren Intensität (z.B. bei einem Abstand des Datenanteils zu dem Objekt gleich Null und/oder bei einem Abstand des Objekts zu dem optoelektronischen Sensor gleich Null) und der Größe des Objekts zu ermitteln.

Gemäß einer Ausführungsform ist die Auswertungseinheit dazu ausgebildet, die Größe des remittierenden Objekts anhand derjenigen Datenanteile in den Abstandsdaten zu ermitteln, deren (gewonnener) Intensitätswert gleich oder größer ist als der erster Intensitätsgrenzwert.

Gemäß einer Ausführungsform ist die Auswertungseinheit dazu ausgebildet, die Erkennung derjenigen Datenanteile in den Abstandsdaten, die eine Störung darstellen, nur dann auszuführen, wenn die ermittelte Größe des Objekts gleich oder größer als ein vorbestimmter Größengrenzwert ist, wenn die ermittelte Remission des Objekts gleich oder größer als ein vorbestimmter Remissionsgrenzwert ist und/oder wenn die ermittelte Intensität des Objekts gleich oder größer als ein zweiter Intensitätsgrenzwert ist.

Der hierin beschriebene Remissionsgrenzwert kann anhand von Prüfkörpern gemessen und/oder festgelegt werden, die einer sicherheitsspezifischen Norm zugrunde liegen. Nach der sicherheitsspezifischen Norm kann beispielsweise gefordert sein, dass ein Objekt mit 4% Remission noch sicher erkannt werden kann. Der Remissionsgrenzwert kann daher beispielsweise bei 4% festgelegt werden, da Objekte mit niedrigerer Remission ignoriert werden können.

Der zweite Intensitätsgrenzwert kann gleich dem ersten Intensitätsgrenzwert sein oder höher oder niedriger als dieser liegen. Die Größe des Objekts kann beispielsweise anhand einer Anzahl an Bildpunkten oder umgerechnet anhand einer (tatsächlichen) räumlichen Ausdehnung bemessen werden. Die Größe des Objekts (z.B. ein Retroreflektor) kann bekannt sein. Zudem kann das Objekt bekannter Weise ein sehr helles, also stark remittierendes, Objekt sein. Auf Basis dessen kann dann erkannt werden, ob sich solch ein Objekt (also z.B. ein Retroreflektor) mit den spezifischen Eigenschaften in dem Überwachungsbereich befindet oder nicht. Wenn ja, wird die Störungserkennung bzw. die Erkennung (und Filterung) derjenigen Datenanteile, die eine Störung darstellen, ausgeführt. Wenn nein, kann die Auswertungseinheit die Auswertung der Abstandsdaten an dieser Stelle abbrechen, die Erkennung von Störungen überspringen und/oder veranlassen, dass ein Signal ausgegeben wird. Diese Vorgehensweise der selektiven Erkennung (und Filterung) kann insbesondere für Sicherheitsanwendungen wichtig sein, da hier möglichst vermieden werden muss, dass valide Messdaten (d.h. Datenanteile echter, vorhandener Objekte) versehentlich ausgefiltert werden. Zudem kann auf diese Weise die Effizienz des optoelektronischen Sensors erhöht werden. Werden mehrere genügend große und in genügendem Ausmaß remittierende (helle) Objekte (z.B. Retroreflektoren) erkannt, kann der hierin beschriebene Prozess der Störungserkennung iterativ für jedes dieser Objekte ausgeführt werden.

Gemäß einer Ausführungsform ist die Auswertungseinheit dazu ausgebildet, die Größe des Objekts anhand derjenigen Bildpunkte in den Abstandsdaten zu ermitteln, deren Intensitätswert gleich oder größer ist als der erste Intensitätsgrenzwert, wobei die Größe des Objekts vorzugsweise als Anzahl an Bildpunkten bestimmt wird. Die Auswertungseinheit ist dazu ausgebildet, für jeden Bildpunkt, dessen Intensitätswert kleiner ist als der erste Intensitätsgrenzwert, einen (minimalen) Abstand zu dem nächstgelegensten Bildpunkt des Objekts zu ermitteln, wobei der Abstand zu dem Objekt vorzugsweise als Anzahl an Bildpunkten bestimmt wird. Die Auswertungseinheit ist dazu ausgebildet, den Wahrscheinlichkeitswert, dass der betreffende Bildpunkt eine Störung darstellt, in Abhängigkeit von seinem Intensitätswert, seinem ermittelten Abstand zu dem nächstgelegensten Bildpunkt des Objekts, der maximal messbaren Intensität und/oder der Intensität des Objekts, und der Größe des Objekts zu ermitteln, und alle diejenigen Bildpunkte als Störung zu erkennen, deren Wahrscheinlichkeitswert gleich oder größer ist als der Wahrscheinlichkeitsgrenzwert.

Gemäß einer Ausführungsform ist die Auswertungseinheit dazu ausgebildet, anhand der Abstandsdaten einen Abstand des remittierenden Objekts (zu dem optoelektronischen Sensor) zu ermitteln, und alle diejenigen Datenanteile als Störung zu erkennen, deren Wahrscheinlichkeitswert gleich oder größer ist als der Wahrscheinlichkeitsgrenzwert und deren zugehöriger Abstandswert innerhalb eines Toleranzbereichs um den ermittelten Abstand des Objekts liegt.. Dieser Vorgehensweise liegt die Erkenntnis zugrunde, dass ein Datenanteil, der eine Störung darstellt, gewöhnlich ungefähr in dem gleichen Abstand zu dem optoelektronischen Sensor erscheint wie das (echte) remittierende Objekt. Durch die zusätzliche Filterung nach dem Toleranzbereich um den ermittelten Abstand des Objekts (oder in anderen Worten, nach einem Abstandskorridor) kann eine Plausibilisierung des Ergebnisses der Filterung nach dem Wahrscheinlichkeitsgrenzwert erreicht werden. Falls sich mehrere remittierende Objekte in dem Überwachungsbereich befinden, dann kann der Prozess für jedes erkannte Objekt separat ausgeführt und/oder iteriert werden.

Mit dem Abstand des Objekts kann ein (mittlerer) relativer Abstand zu dem optoelektronischen Sensor gemeint sein. Der Toleranzbereich kann beispielsweise einen Bereich von ± 50 cm, bevorzugt ± 20 cm, bevorzugt ± 12 cm, bevorzugt ± 10 cm, und bevorzugt ± 5 cm um den ermittelten Abstand des Objekts umfassen.

Gemäß einer Ausführungsform umfasst der Toleranzbereich einen Bereich von ± 20%, bevorzugt ± 15 %, bevorzugt ± 10 %, bevorzugt ± 6 %, bevorzugt ± 5 %, und bevorzugt ± 1 % des Wertes des ermittelten Abstands des Objekts (von dem optoelektronischen Sensor) um den ermittelten Abstand des Objekts.

Gemäß einer Ausführungsform ist die Auswertungseinheit dazu ausgebildet, jeden Bildpunkt in den Abstandsdaten, dessen (gewonnener) Intensitätswert gleich oder größer ist als der erste Intensitätsgrenzwert, in ein Abstandshistogramm einzutragen, einen Peak in dem Abstandshistogramm zu erkennen, wobei der Peak vorzugsweise der größte Peak (d.h. Scheitelpunkt) in dem Abstandshistogramm ist, die Größe des Objekts anhand der Anzahl an Bildpunkten unter dem Peak zu ermitteln, und den Abstand des Objekts anhand der Position des Peaks in dem Abstandshistogramm zu ermitteln.

In anderen Worten wird in den Abstandsdaten nach Bildpunkten gesucht, die einen Intensitätswert aufweisen, der gleich oder größer als der erste Intensitätsgrenzwert ist. Solche Bildpunkte können dann auch als übersteuert bezeichnet werden. Von (Retro-)Reflektoren betroffene Bildpunkte sind oft oder sogar in der Regel übersteuert. Anhand der erkannten übersteuerten Bildpunkte können dann besonders stark remittierende Objekte (z.B. Retroreflektoren) erkannt und insbesondere identifiziert werden.

Gemäß einer Ausführungsform werden die als Störung erkannten Datenanteile in den Abstandsdaten, insbesondere für die Steuerung der Bewegung eines Roboters, aus den Abstandsdaten entfernt, als ungültig markiert, und/oder bei einer weiterführenden Auswertung der Abstandsdaten ignoriert.

Weiterer Gegenstand der Erfindung ist ein System umfassend zumindest einen hierin beschriebenen optoelektronischen Sensor und zumindest einen autonomen Roboter, wobei der optoelektronische Sensor bevorzugt auf dem autonomen Roboter angeracht ist und von diesem mitbewegt werden kann.

Gemäß einer Ausführungsform umfasst das System einen Reflektor, vorzugsweise einen Retroreflektor. Der Reflektor (insbesondere Retroreflektor) kann in dem Überwachungsbereich angebracht sein, wobei sich der Roboter in dem Überwachungsbereich bewegen kann. Der Reflektor (insbesondere Retroreflektor) kann als Hindernismarkierung/-hervorhebung und/oder Navigationsmerkmal dienen und von dem optoelektronischen Sensor zur Steuerung, Lokalisierung und/oder Navigation des Roboters verwendet werden.

Weiterer Gegenstand der Erfindung ist die Verwendung eines hierin beschriebenen optoelektronischen Sensors zur Erfassung von zumindest einem Objekt in einem Überwachungsbereich.

Weiterer Gegenstand der Erfindung ist ein Verfahren zur Erfassung von zumindest einem Objekt in einem Überwachungsbereich, wobei Sendelicht in den Überwachungsbereich ausgesendet wird, wobei von dem Überwachungsbereich remittiertes Empfangslicht empfangen wird, wobei basierend auf dem Empfangslicht Abstandsdaten über den Überwachungsbereich gewonnen werden, und insbesondere mittels eines Lichtlaufzeitverfahrens gemessen werden, wobei die Abstandsdaten Intensitätswerte und zugehörige Abstandswerte umfassen. Ferner wird für alle diejenigen Datenanteile in den Abstandsdaten, die nicht von dem Objekt stammen, und insbesondere für alle diejenigen Datenanteile, deren (gewonnener) Intensitätswert kleiner ist als ein erster Intensitätsgrenzwert, jeweils anhand der Abstandsdaten ein Abstand zu dem Objekt, insbesondere zu dem Rand des Objekts, ermittelt und jeweils anhand des ermittelten Abstands des betreffenden Datenanteils zu dem Objekt, anhand eines Modells für das Streulichtverhalten des optoelektronischen Sensors und anhand des Intensitätswertes des betreffenden Datenanteils ein Wahrscheinlichkeitswert ermittelt, dass der betreffende Datenanteil eine Störung darstellt. Alle diejenigen Datenanteile in den Abstandsdaten werden dann als Störung erkannt, deren ermittelter Wahrscheinlichkeitswert gleich oder größer ist als ein vorbestimmter Wahrscheinlichkeitsgrenzwert.

Gemäß einer Ausführungsform umfasst das Objekt einen Reflektor, vorzugsweise einen Retroreflektor.

Gemäß einer Ausführungsform wird anhand der Abstandsdaten ein Abstand, eine Remission, eine Intensität und/oder eine Größe des remittierenden Objekts ermittelt.

Gemäß einer Ausführungsform wird der Wahrscheinlichkeitswert, dass der betreffende Datenanteil eine Störung darstellt, in Abhängigkeit von dem ermittelten Abstand des betreffenden Datenanteils zu dem Objekt, dem Intensitätswert des betreffenden Datenanteils, der maximal messbaren Intensität (z.B. bei einem Abstand des Datenanteils zu dem Objekt gleich Null und/oder bei einem Abstand des Objekts zu dem optoelektronischen Sensor gleich Null) und der Größe des Objekts ermittelt.

Gemäß einer Ausführungsform werden alle diejenigen Datenanteile als Störung erkannt, deren Wahrscheinlichkeitswert gleich oder größer ist als der Wahrscheinlichkeitsgrenzwert und deren zugehöriger Abstandswert innerhalb eines Toleranzbereichs um den ermittelten Abstand des Objekts liegt.

Es versteht sich, dass das bezüglich des erfindungsgemäßen optoelektronischen Sensors Beschriebene auch für die Verwendung des optoelektronischen Sensors, das System und das Verfahren gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:

Fig. 1      eine schematische Darstellung eines optoelektronischen Sensors gemäß einer Ausführungsform der Erfindung;

Fig. 2A      eine vogelperspektivische Darstellung von Abstandsdaten über einen Überwachungsbereich gewonnen mittels einem optoelektronischen Sensor gemäß einer Ausführungsform der Erfindung;

Fig. 2B      eine vogelperspektivische Darstellung von Abstandsdaten über den Überwachungsbereich mit einem stark remittierenden Objekt gewonnen mittels einem optoelektronischen Sensor gemäß einer Ausführungsform der Erfindung;

| | |
|---|---|
| Fig. 3A | eine zentralperspektivische Darstellung von Abstandsdaten über einen ersten Überwachungsbereich mit einem ersten Testobjekt gewonnen mittels einem optoelektronischen Sensor gemäß einer Ausführungsform der Erfindung; |
| Fig. 3B | eine zentralperspektivische Darstellung von Abstandsdaten über einen zweiten Überwachungsbereich mit einem zweiten Testobjekt gewonnen mittels einem optoelektronischen Sensor gemäß einer Ausführungsform der Erfindung; |
| Fig. 3C | eine zentralperspektivische Darstellung von Abstandsdaten über einen dritten Überwachungsbereich mit einem dritten Testobjekt gewonnen mittels einem optoelektronischen Sensor gemäß einer Ausführungsform der Erfindung; |
| Fig. 4A | eine zentralperspektivische Darstellung von Abstandsdaten über den ersten Überwachungsbereich ohne das erste Testobjekt gewonnen mittels einem optoelektronischen Sensor gemäß einer Ausführungsform der Erfindung; |
| Fig. 4B | eine zentralperspektivische Darstellung von Abstandsdaten über den zweiten Überwachungsbereich ohne das zweite Testobjekt gewonnen mittels einem optoelektronischen Sensor gemäß einer Ausführungsform der Erfindung; |
| Fig. 4C | eine zentralperspektivische Darstellung von Abstandsdaten über den dritten Überwachungsbereich ohne das dritte Testobjekt gewonnen mittels einem optoelektronischen Sensor gemäß einer Ausführungsform der Erfindung; |
| Fig. 5A | eine zentralperspektivische Darstellung der um die Grundintensität bereinigten Abstandsdaten des ersten Testobjekts; |
| Fig. 5B | eine zentralperspektivische Darstellung der um die Grundintensität bereinigten Abstandsdaten des zweiten Testobjekts; |
| Fig. 5C | eine zentralperspektivische Darstellung der um die Grundintensität bereinigten Abstandsdaten des dritten Testobjekts; |
| Fig. 6A | eine Darstellung eines Ausschnitts der um die Grundintensität bereinigten Abstandsdaten des ersten Testobjekts; |
| Fig. 6B | eine Darstellung eines Ausschnitts der um die Grundintensität bereinigten Abstandsdaten des zweiten Testobjekts; |
| Fig. 6C | eine Darstellung eines Ausschnitts der um die Grundintensität bereinigten Abstandsdaten des dritten Testobjekts; |
| Fig. 7A | eine Darstellung des entlang der y-Achse gemittelten Ausschnitts der Abstandsdaten des ersten Testobjekts; |
| Fig. 7B | eine Darstellung des entlang der y-Achse gemittelten Ausschnitts der Abstandsdaten des zweiten Testobjekts; |
| Fig. 7C | eine Darstellung des entlang der y-Achse gemittelten Ausschnitts der Abstandsdaten des dritten Testobjekts; |
| Fig. 8A | eine graphische Darstellung eines in Bezug auf das erste Testobjekt kalibrierten Modells für das Streulichtverhalten eines optoelektronischen Sensor gemäß einer Ausführungsform der Erfindung; |
| Fig. 8B | eine graphische Darstellung eines in Bezug auf das zweite Testobjekt kalibrierten Modells für das Streulichtverhalten eines optoelektronischen Sensor gemäß einer Ausführungsform der Erfindung; |
| Fig. 8C | eine graphische Darstellung eines in Bezug auf das dritte Testobjekt kalibrierten Modells für das Streulichtverhalten eines optoelektronischen Sensor gemäß einer Ausführungsform der Erfindung; |
| Fig. 9A | eine zentralperspektivische Darstellung von Abstandswerten aus Abstandsdaten über einen Überwachungsbereich mit einem Objekt gewonnen mittels einem optoelektronischen Sensor gemäß einer Ausführungsform der Erfindung; |
| Fig. 9B | eine zentralperspektivische Darstellung von Intensitätswerten aus den Abstandsdaten des Objekts gewonnen mittels einem optoelektronischen Sensor gemäß einer Ausführungsform der Erfindung; |
| Fig. 9C | eine Darstellung einer Segmentierung der Abstandsdaten; |
| Fig. 9D | eine zentralperspektivische Darstellung der Abstände der segmentierten Bildpunkte zu dem Objekt; |
| Fig. 10A | eine Darstellung des modellierten Streulichts des Objekts; |
| Fig. 10B | eine zentralperspektivische Darstellung einer ermittelten Wahrscheinlichkeitskarte; |
| Fig. 10C | eine Darstellung der erkannten Bildstörungen; |
| Fig. 10D | eine um die Bildstörungen bereinigte zentralperspektivische Darstellung der Abstandswerte der Abstandsdaten des Objekts; |
| Fig. 11A | eine vogelperspektivische Darstellung der Abstandsdaten über den Überwachungsbereich ohne das Objekt gewonnen mittels einem optoelektronischen Sensor gemäß einer Ausführungsform der Erfindung; |
| Fig. 11B | eine zentralperspektivische Darstellung der Abstandsdaten über den Überwachungsbereich mit dem Objekt gewonnen mittels einem optoelektronischen Sensor gemäß einer Ausführungsform der Erfindung; |

und

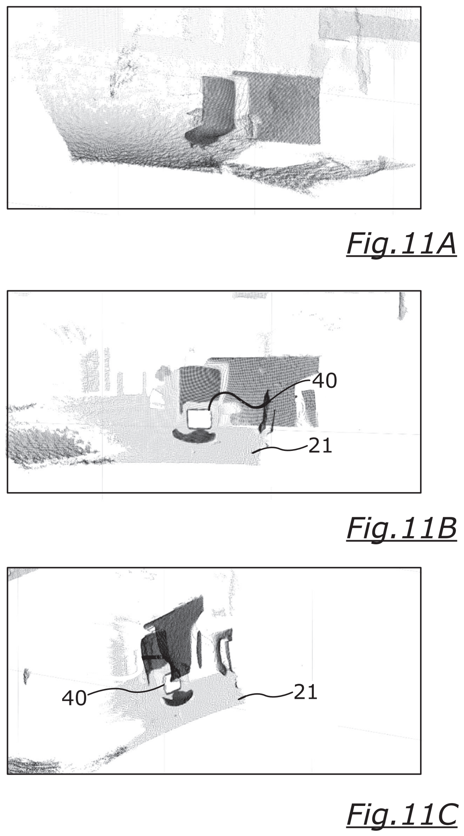

Fig. 11C eine vogelperspektivische Darstellung der Abstandsdaten über den Überwachungsbereich mit dem Objekt gewonnen mittels einem optoelektronischen Sensor gemäß einer Ausführungsform der Erfindung.

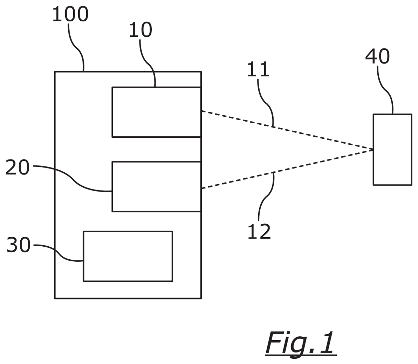

Fig.1 zeigt einen optoelektronischen Sensor 100, insbesondere eine Time-of-Flight-Kamera oder einen LiDAR-Sensor, gemäß einer Ausführungsform zur Erfassung von zumindest einem Objekt 40 in einem Überwachungsbereich. Der optoelektronische Sensor 100 umfasst einen Lichtsender 10, einen Lichtempfänger 20 und eine Auswertungseinheit 30. Der Lichtsender 10 ist dazu ausgebildet, Sendelicht 11 in den Überwachungsbereich auszusenden. Der Lichtempfänger 20 ist dazu ausgebildet, von dem Überwachungsbereich, und insbesondere von dem Objekt 40 in dem Überwachungsbereich, remittiertes Empfangslicht 12 zu empfangen. Die Auswertungseinheit 30 ist dazu ausgebildet, basierend auf dem Empfangslicht 12 Abstandsdaten über den Überwachungsbereich zu gewinnen, wobei die Abstandsdaten Intensitätswerte und zugehörige Abstandswerte umfassen. Die Auswertungseinheit 30 ist ferner dazu ausgebildet, für alle diejenigen Datenanteile (z.B. Bildpunkte oder Pixel) in den Abstandsdaten, die nicht von dem Objekt 40 stammen, und insbesondere für alle diejenigen Datenanteile in den Abstandsdaten, deren Intensitätswert kleiner ist als ein erster Intensitätsgrenzwert, jeweils einen Abstand zu dem Objekt 40 (z.B. in Bildpunkten oder in Pixel), insbesondere zu dem Rand des Objekts 40, zu ermitteln und jeweils anhand des ermittelten Abstands des betreffenden Datenanteils, anhand eines Modells für das Streulichtverhalten des optoelektronischen Sensors 100 und anhand des Intensitätswertes des betreffenden Datenanteils einen Wahrscheinlichkeitswert zu ermitteln, dass der betreffende Datenanteil eine Störung darstellt, und alle diejenigen Datenanteile als Störung zu erkennen, deren ermittelter Wahrscheinlichkeitswert gleich oder größer ist als ein Wahrscheinlichkeitsgrenzwert.

Die Auswertungseinheit 30 des in Fig. 1 gezeigten optoelektronischen Sensors kann dazu ausgebildet sein, anhand der Abstandsdaten einen Abstand (zu dem optoelektronischen Sensor, z.B. in Meter), eine Größe, eine Intensität und/oder eine Remission des remittierenden Objekts 40 zu ermitteln. Die Auswertungseinheit 30 kann beispielsweise die Größe des remittierenden Objekts 40 anhand derjenigen Datenanteile in den Abstandsdaten ermitteln, deren Intensitätswert gleich oder größer ist als der erster Intensitätsgrenzwert.

Die Auswertungseinheit 30 des in Fig. 1 gezeigten optoelektronische Sensors 100 kann dazu ausgebildet sein, den Abstand des Objekts 40 (nur dann) zu ermitteln und/oder die Erkennung derjenigen Datenanteile in den Abstandsdaten, die eine Störung darstellen, (nur dann) auszuführen, wenn die Größe des Objekts 40 gleich oder größer als ein vorbestimmter Größengrenzwert ist, wenn die Intensität des Objekts 40 gleich oder größer als ein vorbestimmter zweiter Intensitätsgrenzwert ist und/oder wenn die Remission des Objekts größer oder gleich als ein Remissionsgrenzwert ist. Auf diese Weise kann vermieden werden, dass valide Datenanteile (d.h. Datenanteile echter, vorhandener Objekte) versehentlich ausgefiltert werden, was besonders für Sicherheitsanwendungen wichtig ist. Werden mehrere genügend große und in genügendem Ausmaß remittierende Objekte erkannt oder detektiert, kann der Prozess der Störungserkennung iterativ für jedes der erkannten Objekte ausgeführt werden.

Die Auswertungseinheit 30 eines optoelektronischen Sensors 100, wie er beispielsweise in Fig. 1 gezeigt ist, kann dazu ausgebildet sein, alle diejenigen Datenanteile (z.B. Bildpunkte) als Störung zu erkennen, deren Wahrscheinlichkeitswert gleich oder größer ist als der Wahrscheinlichkeitsgrenzwert und deren zugehöriger Abstandswert innerhalb eines Toleranzbereichs um den ermittelten Abstand des Objekts 40 (zu dem optoelektronischen Sensor) liegt.

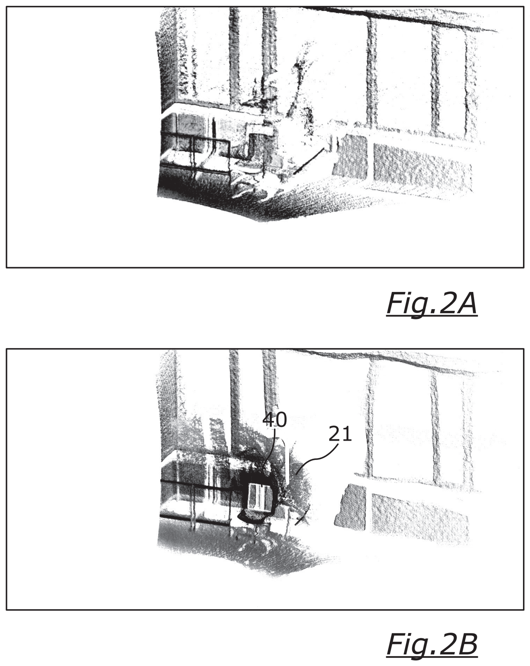

Fig. 2A und Fig 2B zeigen eine vogelperspektivische Darstellung von Abstandsdaten über einen Überwachungsbereich ohne beziehungsweise mit einem stark remittierenden Objekt 40 gewonnen mittels einem optoelektronischen Sensor 100, wie er zum Beispiel in Fig. 1 dargestellt ist. Wie in Fig. 2A und Fig. 2B gezeigt können die gewonnenen Abstandsdaten eine Vielzahl an Bildpunkten mit jeweils einem Intensitätswert und einem zugehörigen Abstandswert umfassen.

Insbesondere bei einer simultanen Abtastung des Überwachungsbereichs (im Gegensatz zur Abtastung in Einzelmessungen), kann Streulicht in der Optik des Lichtempfängers 20 des optoelektronischen Sensors 100 eine korrekte Abstandsmessung erschweren oder verhindern. Eine starke Remission des Sendelichts durch ein remittierendes Objekt 40, zum Beispiel einen Retroreflektor, kann zu verfälschten Abstandsmessungen um den Bildbereich des Objekts 40 führen. Typischerweise entstehen diese Bildstörungen 21, wenn das Streulicht energetisch höher ist als der Grundpegel oder die Grundintensität, die der Überwachungsbereich zurückremittiert, was insbesondere bei einem dunklen oder weit entfernten Hintergrund der Fall sein kann.

Fig. 2A und Fig 2B verdeutlichen eine solche Situation anhand einer Szene mit einem Stuhl vor mehreren Fenstern, wobei die Fenster hier als Ersatz für einen dunklen Hintergrund dienen. Wie in Fig. 2A ersichtlich kann im Bereich der Fenster ein Rauschen der Abstandswerte beobachtet werden, wobei diese Rauschwerte jedoch noch gut also solche erkennbar und daher beherrschbar sind. Sobald ein stark remittierendes Objekt 40, hier ein Retroreflektor, wie in Fig. 2B gezeigt auf dem Stuhl platziert wird, nehmen alle Rauschwerte bzw. Bildstörungen 21 den Abstand des Objekts 40 an. Das Streulicht überschreibt einige bis alle Bildpunkte in der Umgebung des Objekts 40, welche nicht selbst stark genug remittieren. Es entsteht eine aus einer Wolke von Bildpunkten 21 gebildete sphärische Bildstörung oder ein Artefakt, wobei der Radius des sphärischen Artefakts dem Abstand des Objekts 40 und der Mittelpunkt der Position des optoelektronischen Sensors 100 (nicht in Fig. 2A und 2B gezeigt) entsprechen kann.

Kurz gesagt können die in Fig. 2B gezeigten Bildpunkte 21 aufgrund von Mehrfach-Reflexionen und Streuung des Empfangslichts an optischen Elementen im Lichtempfänger 20 des optoelektronischen Sensors 100 entstehen. Diese Bildpunkte 21 stellen Störungen dar und können ein im optoelektronischen Sensor 100 konfiguriertes Warn- oder Schutzfeld auslösen. In der Folge kann unnötigerweise einen Sicherheitsstopp eines autonomen Roboters verursacht werden, der sich in einer Industrieanlage und insbesondere in dem Überwachungsbereich in der Industrieanlage bewegen kann. Es versteht sich, dass der optoelektronische Sensor 100, wie er in Fig. 1 gezeigt ist, an dem autonomen Roboter angebracht sein kann und insbesondere von diesem mitbewegt werden kann.

Die hierin beschriebenen Vorgehensweisen erlauben die Erkennungen (und Filterung) von denjenigen Bildpunkten, die mit einer gewissen Wahrscheinlichkeit von Streulicht überschrieben worden sind. Dabei kommt ein Modell für das Streulichtverhalten des optoelektronischen Sensors 100 zur Anwendung, das auch als eine Näherung des Einflussbereichs des remittierenden Objekts 40 im Zusammenspiel mit der Optik des Lichtempfängers 20 gesehen werden kann.

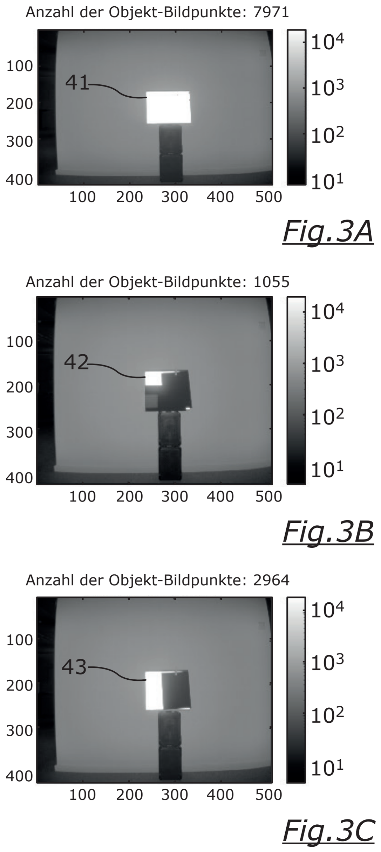

Fig. 3A bis Fig. 8C verdeutlichen, wie ein Modell für das Streulichtverhalten des optoelektronischen Sensors in Bezug auf bestimmte Objekte in dem Überwachungsbereich erstellt und/oder kalibriert werden kann. Die hierin beschriebene Vorgehensweise fußt darauf, dass das Streulichtverhalten der Optik des Lichtempfängers 20 des optoelektronischen Sensors 100, wie er z.B. in Fig. 1 gezeigt ist, im Zusammenspiel mit bestimmten (Test-)Objekten 41, 42, 43 bekannt sein kann. Anhand von Abstandsmessungen eines sonst identischen Überwachungsbereichs mit und ohne Testobjekt kann das Modell für das Streulichtverhalten in Bezug auf ein bestimmtes Testobjekt 41, 42, 43 kalibriert werden. Bei den hierin beschrieben Testobjekten kann es sich um Retroreflektoren handeln. Die Kalibrierung kann durch Aufnahme echter Messdaten erfolgen, wie in Fig. 3A bis Fig. 8C veranschaulicht. Zusätzlich oder alternativ kann auch ein Modell für das Streulichtverhalten simuliert werden.

Fig. 3A, Fig. 3B und Fig. 3C zeigen jeweils eine zentralperspektivische Darstellung von Abstandsdaten, genauer der Intensitätswerte aus den Abstandsdaten, über einen ersten, zweiten beziehungsweise dritten Überwachungsbereich mit einem stark remittierenden ersten Testobjekt 41, zweiten Testobjekt 42 beziehungsweise dritten Testobjekt 43 gewonnen mittels einem optoelektronischen Sensor 100, wie er z.B. in Fig. 1 dargestellt ist. Die mittels der Auswertungseinheit 30 des optoelektronischen Sensors 100 ermittelte Größe des ersten Testobjekts 41 beträgt 7971 Bildpunkte, die Größe des zweiten Testobjekts 42 beträgt 1055 Bildpunkte und die Größe des dritten Testobjekts 43 beträgt 2964 Bildpunkte.

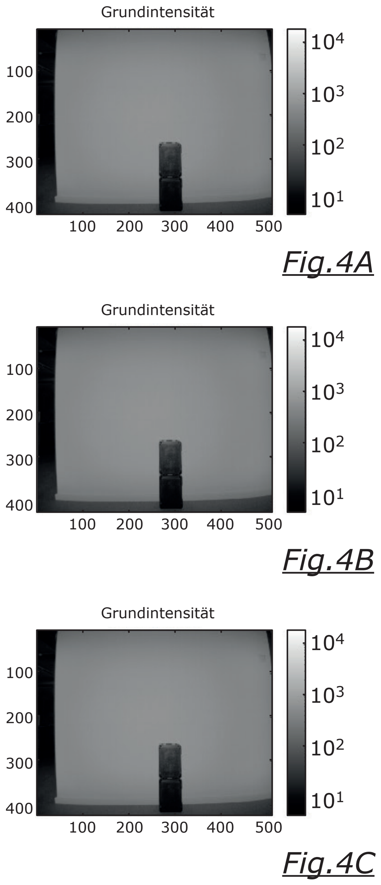

Fig. 4A, Fig. 4B und Fig. 4C zeigen jeweils eine zentralperspektivische Darstellung von Abstandsdaten, genauer der Intensitätswerte aus den Abstandsdaten, über den ersten, zweiten beziehungsweise dritten Überwachungsbereich ohne die Testobjekte 41,42,43 gewonnen mittels einem optoelektronischen Sensor 100, wie er z.B. in Fig. 1 dargestellt ist. Die in Fig. 4A, Fig. 4B und Fig. 4C gezeigten Abstandsdaten stellen eine Aufnahme des Grundpegels bzw. der Grundintensität des jeweiligen Überwachungsbereichs dar.

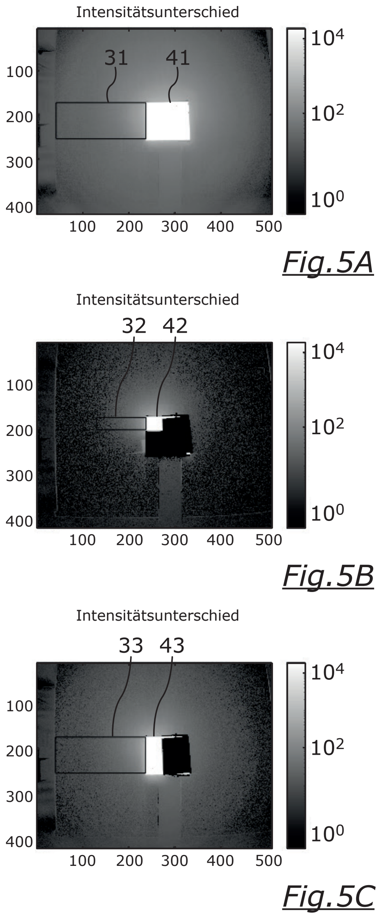

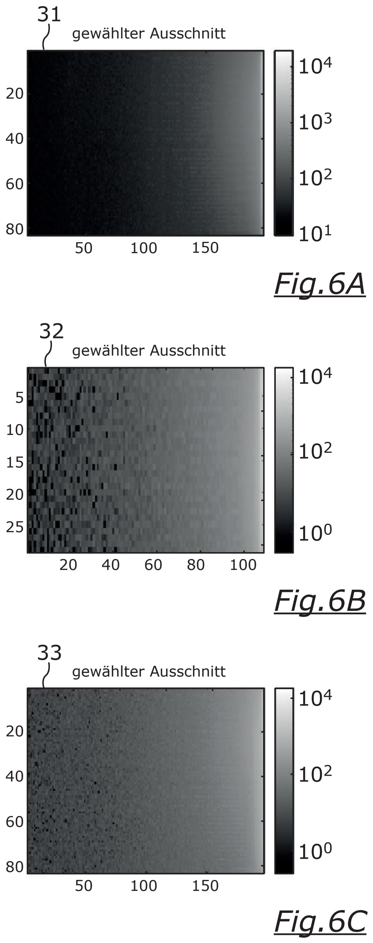

Fig. 5A, Fig. 5B und Fig. 5C zeigen jeweils eine zentralperspektivische Darstellung der um die jeweilige Grundintensität (beispielsweise durch Subtraktion) bereinigten Abstandsdaten, genauer der Intensitätswerte, des ersten Testobjekts 41, des zweiten Testobjekts 42 beziehungsweise des dritten Testobjekts 43. In Fig. 5A, Fig. 5B und Fig. 5C sind ein gewählter Ausschnitt 31, ein gewählter Ausschnitt 32 beziehungsweise ein gewählter Ausschnitt 33 jeweils mit einem Rechteck gekennzeichnet, wobei diese Ausschnitte in Fig. 6A, Fig. 6B beziehungsweise Fig. 6C genauer dargestellt sind. Die Ausschnitte 31, 32, 33 zeigen den Intensitätsverlauf vom Rand des jeweiligen Testobjekts 41, 42, 43 weg nach Außen und insbesondere zur (linken) Seite des jeweiligen Überwachungsbereichs.

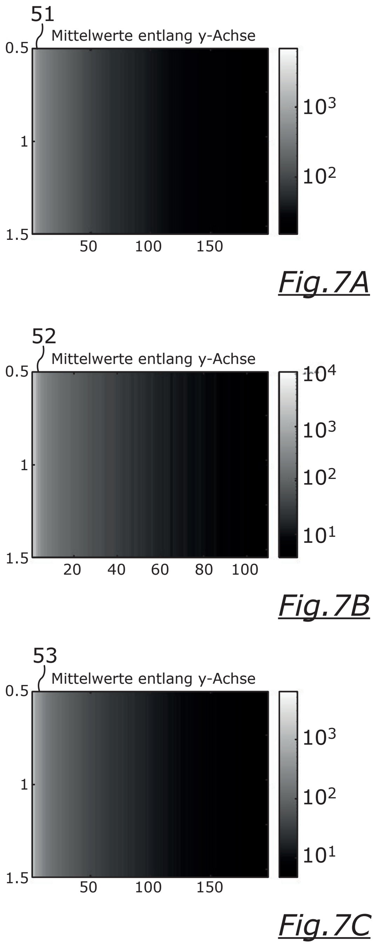

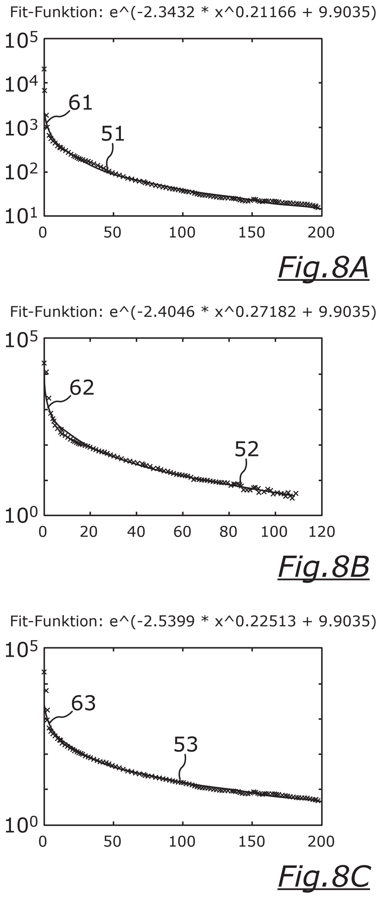

Wie in Fig. 7A, Fig. 7B und Fig. 7C dargestellt werden die gewählten Ausschnitte 31, 32, 33 entlang der y-Achse gemittelt. Die so erhaltenen Datenpunkte 51, 52, 53 sind in Fig. 8A, Fig. 8B und Fig. 8B graphisch als Kreuze gekennzeichnet. Um die Intensitätsabweichung durch das Streulicht zu approximieren, kann an die Datenpunkte jeweils eine Fit-Funktion 61, 62, 63 gemäß folgender allgemeiner Gleichung 2 genähert werden,

[Gleichung 2]

$$F(x) = e^{(a \cdot x^b + c)} = e^{(a \cdot x^b)} \cdot e^c,$$

wobei x in Gleichung 2 der Abstand (z.B. in Bildpunkten oder in Pixel bemessen) des jeweiligen Datenpunkts zu dem Testobjekt 41, 42, 43, insbesondere zu dem Rand des Testobjekts 41, 42, 43, ist, wobei der Parameter a einen Wert zwischen -2.3 und -2.6 annehmen kann, der Parameter b einen Wert zwischen 0.2 und 0.3 annehmen kann, und der Parameter c anhand der mit dem optoelektronischen Sensor 100 maximal messbaren Intensität $I_{max}$ (hier 20000 AU) gemäß folgender Gleichung 3 errechnet wird

[Gleichung 3]

$$c = log(I_{\max}) = \log(20000) = 9{,}9035.$$

Gleichung 2 kann auch als ein generalisiertes Modell für das Streulichtverhalten des optoelektronischen Sensors 100 gesehen werden.

Die erste Fit-Funktion 61 für das erste Testobjekt 41, die zweite Fit-Funktion 62 für das zweite Testobjekt 42 und die dritte Fit-Funktion 63 für das dritte Testobjekt 43 sind in Fig. 8A, Fig.8B beziehungsweise Fig. 8C jeweils als durchgehende Linie gekennzeichnet. In der in Fig. 8A graphisch dargestellten ersten Fit-Funktion 61 für das erste Testobjekt 41 hat der Parameter a einen Wert von -2,3432, der Parameter b einen Wert von 0,21166 und der Parameter c einen Wert von 9,9035. In der in Fig. 8B graphisch dargestellten zweiten Fit-Funktion 62 für das zweite Testobjekt 42 hat der Parameter a einen Wert von -2,4046, der Parameter b einen Wert von 0,27182 und der Parameter c einen Wert von 9,9035. In der in Fig. 8C graphisch dargestellten dritten Fit-Funktion 63 für das dritte Testobjekt 43 hat der Parameter a einen Wert von -2,5399, der Parameter b einen Wert von 0,22513 und der Parameter c einen Wert von 9,9035. Auf diese Weise kann für jedes bekannte (Test-)Objekt, z.B. für jeden bekannten Reflektor-Typ, ein Modell für das Streulichtverhalten des optoelektronischen Sensors 100 kalibriert werden.

Aus den Messungen wird ersichtlich, dass die Werte der Parameter a und b in dem Modell für das Streulichtverhalten gemäß Gleichung 2 abhängig von der Größe (d.h. von der Anzahl der Bildpunkte) des Testobjekts 41, 42, 43 sein können. In anderen Worten kann der Parameter a anhand der Größe des Testobjekts (bzw. der Anzahl an ermittelten Bildpunkten des Testobjekts) gewählt werden und einen Wert zwischen -2.3 und -2.6 annehmen. Zusätzlich oder alternativ kann der Parameter b anhand der Größe des Testobjekts (bzw. der Anzahl an ermittelten Bildpunkten des Testobjekts) gewählt werden und einen Wert zwischen 0.2 und 0.3 annehmen. Der Parameter b kann einen umso größeren Wert annehmen je kleiner das Testobjekt 41, 42, 43 ist. Das kann bedeuten, dass für andere Objekte, bezüglich denen noch keine Kalibration vorgenommen wurde, die Werte für die Parameter a und b in Abhängigkeit von der ermittelten Größe des Objekts 40, beispielsweise durch Anwendung einer vorkalibrierten Funktion oder Interpolation von einer vorerstellten Nachschlagtabelle entnommenen Werten, gewählt werden können.

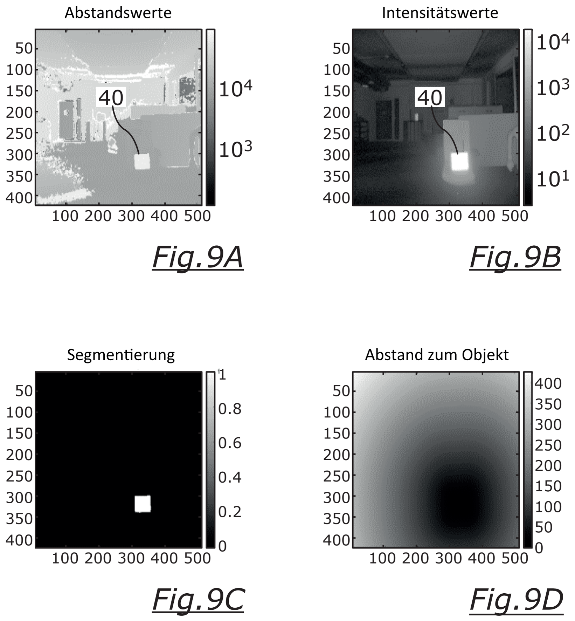

Fig. 9A bis Fig. 11C verdeutlichen, wie Störungen in Abstandsdaten gewonnen mit einem optoelektronischen Sensor 100 erkannt und gefiltert werden können.

Fig. 9A und Fig. 9B zeigen eine zentralperspektivische Darstellung von Abstandswerten beziehungsweise Intensitätswerten aus Abstandsdaten über einen Überwachungsbereich mit einem Objekt 40 gewonnen mittels einem optoelektronischen Sensor 100, wie er z.B. in Fig. 1 gezeigt ist.

Die Bildpunkte, die nicht von dem in Fig. 9A oder Fig. 9B gezeigten Objekt 40 stammen, können beispielsweise anhand eines Intensitätsgrenzwertes erkannt und segmentiert (und/oder binarisiert) werden. Beispielsweise können alle Bildpunkte, die einen Intensitätswert von kleiner als 90%, bevorzugt 95%, bevorzugt 99% und noch weiter bevorzugt 100% der mit dem optoelektronischen Sensor maximal messbaren Intensität, hier 20000 AU, aufweisen, erkannt und, wie in Fig. 9C in schwarz dargestellt, in der Segmentierung auf den Wert Null gesetzt werden. Den übrigen Bildpunkten, die einen Intensitätswert von gleich oder größer als dem Intensitätsgrenzwert aufweisen, d.h. den Bildpunkten des Objekts 40, wird in der Segmentierung der Wert 1 zugewiesen. In Fig. 9C sind die Bildpunkte des Objekts 40 in weiß dargestellt, wobei ein Intensitätsgrenzwert von 19000 AU angewendet wurde.

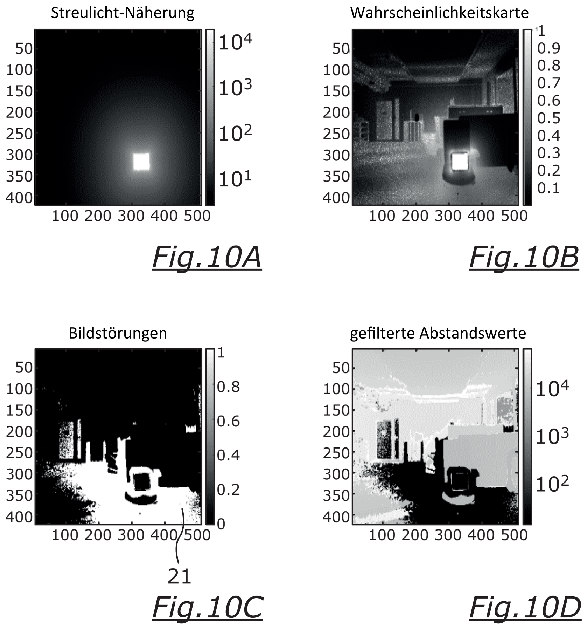

Für alle segmentierten Bildpunkte (die also nicht von dem Objekt 40 stammen), wird ein (minimaler) Abstand zu dem nächstgelegensten Bildpunkt des Objekts 40 ermittelt, wie in Fig. 9D dargestellt. Das Objekt 40 kann bekannterweise dem ersten Testobjekt 41 entsprechen, sodass in Bezug auf das Objekt 40 bereits ein Modell für das Streulichtverhalten, d.h. Fit-Funktion 61 aus Fig. 8A, kalibriert ist. Fig. 10A zeigt das anhand des bekannten Modells für das Streulichtverhalten, d.h. Fit-Funktion 61 aus Fig. 8A, genäherte Streulicht in Bezug auf das Objekt 40. Für jeden segmentierten Bildpunkt kann basierend auf seinem ermittelten Abstand zu dem Objekt 40, seinem Intensitätswert und dem nach dem Modell für den Abstand des Bildpunkts genäherten Streulicht ein Wahrscheinlichkeitswert ermittelt werden, dass der betreffende Bildpunkt eine Bildstörung darstellt. Genauer gesagt wird das für den Abstand des betreffenden Bildpunkts genäherte Streulicht durch den Intensitätswert des betreffenden Bildpunkts (gemäß Gleichung 1) geteilt. Diese Vorgehensweise beruht auf der Erkenntnis, dass, je größer der ursprüngliche Intensitätswert eines Bildpunkts im Verhältnis zu dem Streulicht des Objekts 40 ist, dieser Bildpunkt umso weniger wahrscheinlicher von Streulicht überschrieben worden ist. Umgekehrt wird ein Bildpunkt mit niedrigem Intensitätswert in der Nähe des Objekts 40 mit größerer Wahrscheinlichkeit durch Streulicht überschrieben worden sein. Die so ermittelten Wahrscheinlichkeitswerte für die segmentierten Bildpunkte sind in der Wahrscheinlichkeitskarte in Fig. 10B dargestellt.

Diejenigen Bildpunkte 21 der segmentierten Bildpunkte, die mit einer gewissen Wahrscheinlichkeit eine Störung darstellen, können anhand eines Wahrscheinlichkeitsgrenzwertes erkannt und segmentiert (und/oder binarisiert) werden. Beispielsweise können alle Bildpunkte 21, die einen Wahrscheinlichkeitswert von gleich oder größer als einem Wahrscheinlichkeitsgrenzwert von 0,5 aufweisen, erkannt und, wie in Fig. 10C in weiß dargestellt, in der Segmentierung auf den Wert 1 gesetzt werden. Den übrigen Bildpunkten der segmentierten Bildpunkte, die einen Wahrscheinlichkeits-

**EP 4 741 872 A1**

wert von kleiner als 0,5 aufweisen und daher wahrscheinlich eher keine Störung darstellen, wird der Wert Null zugewiesen. In Fig. 10C sind diese (mit einer gewissen Wahrscheinlichkeit) validen Bildpunkte in schwarz dargestellt. Die Darstellung in Fig. 10C kann auch als Bildstörungsmaske bezeichnet werden.

Optional kann die Bildstörungsmaske in Fig. 10C mit einer Plausibilisierung über die Abstandswerte in Fig. 9A verbessert werden. Da die Bildstörungen in der Regel denselben (radialen) Abstandswert aufweisen wie der Abstand des Objekts 40 selbst, können in der Bildstörungsmaske in Fig. 10C alle diejenigen Bildpunkte beibehalten werden, deren zugehöriger Abstandswert innerhalb eines Toleranzbereichs (bzw. Abstandskorridors) um den anhand der Abstandsdaten in Fig. 9A ermittelten Abstand des Objekts 40 liegt.

Die Abstandswerte der Abstandsdaten in Fig. 9A können dann anhand der Bildstörungsmaske gefiltert werden, wie in Fig. 10D dargestellt. Die Abstandswerte der erkannten Bildpunkte 21, die eine Störung darstellen, können dann invalidiert und beispielweise, wie in Fig. 10D gezeigt, auf den Wert Null gesetzt werden.

Fig. 11A zeigt eine (dreidimensionale) vogelperspektivische Darstellung der Abstandsdaten über den Überwachungsbereich aus Fig. 9A bis Fig. 10D ohne das Objekt 40 gewonnen mittels einem optoelektronischen Sensor gemäß einer Ausführungsform der Erfindung. Fig. 11B und Fig. 11C zeigen jeweils eine (dreidimensionale) zentralbeziehungsweise vogelperspektivische Darstellung der gefilterten Abstandsdaten aus Fig. 10D, wobei die (wie hierin beschrieben) als Störung erkannten Bildpunkte 21 hervorgehoben sind.

Mittels der hierin beschriebenen Vorgehensweisen können von stark remittierenden Objekten, z.B. Retroreflektoren, verursachte Bildstörungen erkannt werden. Optoelektronische (Industrie-)Sensor können dazu befähigt werden, (Reflektor-)Störungen auszublenden bzw. zu ignorieren. Überdies kann die Kenntnis über Position, Größe und Gestalt von Objekten, z.B. Retroreflektoren, im Sichtfeld des optoelektronischen Sensors dazu genutzt werden, um eine adäquate Systemreaktion herbeizuführen, wie z.B. die automatische Adaption der Schutzfeldgeometrie bei gleichzeitiger Verringerung der Fahrgeschwindigkeit eines autonomen Roboters. In allen Fällen kann die Verfügbarkeit des optoelektronischen Sensors verbessert werden, was gemeinhin als wichtiges Qualitätskriterium angesehen werden kann.

## Patentansprüche

1. Optoelektronischer Sensor (100), insbesondere eine Time-of-Flight-Kamera oder ein LiDAR-Sensor, zur Erfassung von zumindest einem Objekt (40) in einem Überwachungsbereich,

   wobei der optoelektronische Sensor (100) einen Lichtsender (10), einen Lichtempfänger (20) und eine Auswertungseinheit (30) umfasst,
   wobei der Lichtsender (10) dazu ausgebildet ist, Sendelicht (11) in den Überwachungsbereich auszusenden,
   wobei der Lichtempfänger (20) dazu ausgebildet ist, von dem Überwachungsbereich remittiertes Empfangslicht (12) zu empfangen, und wobei die Auswertungseinheit (30) dazu ausgebildet ist,

   basierend auf dem Empfangslicht (12) Abstandsdaten über den Überwachungsbereich zu gewinnen, wobei die Abstandsdaten Intensitätswerte und zugehörige Abstandswerte umfassen,
   für alle diejenigen Datenanteile (21) in den Abstandsdaten, die nicht von dem Objekt (40) stammen, und insbesondere für alle diejenigen Datenanteile (21), deren Intensitätswert kleiner ist als ein erster Intensitätsgrenzwert,

   jeweils anhand der Abstandsdaten einen Abstand zu dem Objekt (40), insbesondere zu dem Rand des Objekts (40), zu ermitteln, und
   jeweils anhand des ermittelten Abstands des betreffenden Datenanteils (21) zu dem Objekt (40), anhand eines Modells (61, 62, 63) für das Streulichtverhalten des optoelektronischen Sensors (100) und anhand des Intensitätswertes des betreffenden Datenanteils (21) einen Wahrscheinlichkeitswert zu ermitteln, dass der betreffende Datenanteil (21) eine Störung darstellt, und

   alle diejenigen Datenanteile (21) als Störung zu erkennen, deren ermittelter Wahrscheinlichkeitswert gleich oder größer ist als ein Wahrscheinlichkeitsgrenzwert.

2. Optoelektronischer Sensor (100) nach Anspruch 1, wobei die Auswertungseinheit (30) dazu ausgebildet ist, anhand der Abstandsdaten einen Abstand, eine Größe, eine Intensität und/oder eine Remission des remittierenden Objekts (40) zu ermitteln.

3. Optoelektronischer Sensor (100) nach Anspruch 2, wobei der Wahrscheinlichkeitswert, dass der betreffende Datenanteil (21) eine Störung darstellt, in Abhängigkeit von dem ermittelten Abstand des betreffenden Datenanteils zu dem Objekt (40), dem Intensitätswert des betreffenden Datenanteils (21), der maximal messbaren Intensität, und der Größe des Objekts (40) ermittelt wird.

4. Optoelektronischer Sensor (100) nach Anspruch 2 oder 3, wobei die Auswertungseinheit (30) dazu ausgebildet ist, die Größe des remittierenden Objekts (40) anhand derjenigen Datenanteile in den Abstandsdaten zu ermitteln, deren Intensitätswert gleich oder größer ist als der erste Intensitätsgrenzwert.

5. Optoelektronischer Sensor (100) nach einem der Ansprüche 2 bis 4, wobei die Auswertungseinheit (30) dazu ausgebildet ist, die Erkennung derjenigen Datenanteile (21) in den Abstandsdaten, die eine Störung darstellen, nur dann auszuführen, wenn die ermittelte Größe des Objekts (40) gleich oder größer als ein vorbestimmter Größengrenzwert ist, wenn die ermittelte Remission des Objekts (40) gleich oder größer als ein vorbestimmter Remissionsgrenzwert ist und/oder wenn die ermittelte Intensität des Objekts (40) gleich oder größer als ein zweiter Intensitätsgrenzwert ist.

6. Optoelektronischer Sensor (100) nach einem der Ansprüche 2 bis 5, wobei die Abstandsdaten eine Vielzahl an Bildpunkten mit jeweils einem Intensitätswert und einem zugehörigen Abstandswert umfassen, und wobei die Auswertungseinheit (30) dazu ausgebildet ist,

die Größe des Objekts (40) anhand derjenigen Bildpunkte in den Abstandsdaten zu ermitteln, deren Intensitätswert gleich oder größer ist als der erste Intensitätsgrenzwert, wobei die Größe des Objekts (40) vorzugsweise als Anzahl an Bildpunkten bestimmt wird, und für jeden Bildpunkt (21), dessen Intensitätswert kleiner ist als der erste Intensitätsgrenzwert,

einen Abstand zu dem nächstgelegensten Bildpunkt des Objekts (40) zu ermitteln, wobei der Abstand zu dem Objekt (40) vorzugsweise als Anzahl an Bildpunkten bestimmt wird, und
den Wahrscheinlichkeitswert, dass der betreffende Bildpunkt (21) eine Störung darstellt, in Abhängigkeit von seinem Intensitätswert, seinem ermittelten Abstand zu dem nächstgelegensten Bildpunkt des Objekts (40), der maximal messbaren Intensität und/oder der Intensität des Objekts (40), und der Größe des Objekts (40) zu ermitteln, und

alle diejenigen Bildpunkte (21) als Störung zu erkennen, deren Wahrscheinlichkeitswert gleich oder größer ist als der Wahrscheinlichkeitsgrenzwert.

7. Optoelektronischer Sensor (100) nach einem der voranstehenden Ansprüche, wobei die Auswertungseinheit (30) dazu ausgebildet ist, anhand der Abstandsdaten einen Abstand des remittierenden Objekts (40) zu ermitteln, und alle diejenigen Datenanteile (21) als Störung zu erkennen, deren Wahrscheinlichkeitswert gleich oder größer ist als der Wahrscheinlichkeitsgrenzwert und deren zugehöriger Abstandswert innerhalb eines Toleranzbereichs um den ermittelten Abstand des Objekts (40) liegt.

8. Optoelektronischer Sensor (100) nach Anspruch 7,

wobei die Abstandsdaten eine Vielzahl an Bildpunkten mit jeweils einem Intensitätswert und einem zugehörigen Abstandswert umfassen, und
wobei die Auswertungseinheit (30) dazu ausgebildet ist,

jeden Bildpunkt in den Abstandsdaten, dessen Intensitätswert gleich oder größer ist als der erste Intensitätsgrenzwert, in ein Abstandshistogramm einzutragen,
einen Peak in dem Abstandshistogramm zu erkennen, wobei der Peak vorzugsweise der größte Peak in dem Abstandshistogramm ist, die Größe des Objekts (40) anhand der Anzahl an Bildpunkten unter dem Peak zu ermitteln, und
den Abstand des Objekts (40) anhand der Position des Peaks in dem Abstandshistogramm zu ermitteln.

9. Optoelektronischer Sensor (100) nach einem der voranstehenden Ansprüche, wobei die als Störung erkannten Datenanteile (21) in den Abstandsdaten, insbesondere für die Steuerung der Bewegung eines Roboters, aus den Abstandsdaten entfernt werden, als ungültig markiert werden, und/oder bei einer weiterführenden Auswertung der Abstandsdaten ignoriert werden.

10. Optoelektronischer Sensor (100) nach einem der voranstehenden Ansprüche, wobei das Objekt (40) einen Reflektor, und vorzugsweise einen Retroreflektor, umfasst.

11. System umfassend zumindest einen optoelektronischen Sensor (100) nach einem der Ansprüche 1 bis 10 und zumindest einen autonomen Roboter, wobei der optoelektronische Sensor (100) bevorzugt auf dem autonomen Roboter angeracht ist und von diesem mitbewegt werden kann.

12. Verwendung eines optoelektronischen Sensors (100) nach einem Ansprüche 1 bis 10 zur Erfassung von zumindest einem Objekt (40) in einem Überwachungsbereich.

13. Verfahren zur Erfassung von zumindest einem Objekt (40), insbesondere einem Reflektor, bevorzugt einem Retroreflektor, in einem Überwachungsbereich,

wobei Sendelicht (11) in den Überwachungsbereich ausgesendet wird; wobei von dem Überwachungsbereich remittiertes Empfangslicht (12) empfangen wird;
wobei basierend auf dem Empfangslicht (12) Abstandsdaten über den Überwachungsbereich gewonnen werden, und insbesondere mittels eines Lichtlaufzeitverfahrens gemessen werden, wobei die Abstandsdaten Intensitätswerte und zugehörige Abstandswerte umfassen;
wobei für alle diejenigen Datenanteile in den Abstandsdaten, die nicht von dem Objekt (40) stammen, und insbesondere für alle diejenigen Datenanteile (21), deren Intensitätswert kleiner ist als ein erster Intensitätsgrenzwert,

jeweils anhand der Abstandsdaten ein Abstand zu dem Objekt (40), insbesondere zu dem Rand des Objekts (40), ermittelt wird, und
jeweils anhand des ermittelten Abstands des betreffenden Datenanteils (21) zu dem Objekt (40), anhand eines Modells (61, 62, 63) für das Streulichtverhalten des optoelektronischen Sensors (100) und anhand des Intensitätswertes des betreffenden Datenanteils (21) ein Wahrscheinlichkeitswert ermittelt wird, dass der betreffende Datenanteil (21) eine Störung darstellt; und

wobei alle diejenigen Datenanteile (21) in den Abstandsdaten als Störung erkannt werden, deren ermittelter Wahrscheinlichkeitswert gleich oder größer ist als ein vorbestimmter Wahrscheinlichkeitsgrenzwert.

14. Verfahren nach Anspruch 13,

wobei anhand der Abstandsdaten ein Abstand des remittierenden Objekts (40) ermittelt wird; und
wobei alle diejenigen Datenanteile (21) als Störung erkannt werden, deren Wahrscheinlichkeitswert gleich oder größer ist als der Wahrscheinlichkeitsgrenzwert und deren zugehöriger Abstandswert innerhalb eines Toleranzbereichs um den ermittelten Abstand des Objekts (40) liegt.

*Fig.1*

*Fig.2A*

*Fig.2B*

Anzahl der Objekt-Bildpunkte: 7971

*Fig.3A*

Anzahl der Objekt-Bildpunkte: 1055

*Fig.3B*

Anzahl der Objekt-Bildpunkte: 2964

*Fig.3C*

Grundintensität

*Fig.4A*

Grundintensität

*Fig.4B*

Grundintensität

*Fig.4C*

Fig.5A

Fig.5B

Fig.5C

31 gewählter Ausschnitt

_Fig.6A_

32 gewählter Ausschnitt

_Fig.6B_

33 gewählter Ausschnitt

_Fig.6C_

51

Mittelwerte entlang y-Achse

Fig.7A

52

Mittelwerte entlang y-Achse

Fig.7B

53

Mittelwerte entlang y-Achse

Fig.7C

Fit-Funktion: e^(-2.3432 * x^0.21166 + 9.9035)

*Fig.8A*

Fit-Funktion: e^(-2.4046 * x^0.27182 + 9.9035)

*Fig.8B*

Fit-Funktion: e^(-2.5399 * x^0.22513 + 9.9035)

*Fig.8C*

Abstandswerte

*Fig.9A*

Intensitätswerte

*Fig.9B*

Segmentierung

*Fig.9C*

Abstand zum Objekt

*Fig.9D*

Streulicht-Näherung

*Fig.10A*

Wahrscheinlichkeitskarte

*Fig.10B*

Bildstörungen

21

*Fig.10C*

gefilterte Abstandswerte

*Fig.10D*

EP 4 741 872 A1

*Fig.11A*

*Fig.11B*

*Fig.11C*

24

Europäisches Patentamt
European Patent Office
Office européen des brevets

# EUROPÄISCHER RECHERCHENBERICHT

Nummer der Anmeldung

EP 25 20 9445

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2023 111702 A1 (GM GLOBAL TECH OPERATIONS LLC [US]) 4. April 2024 (2024-04-04) * Absätze [0005], [0028] - Absatz [0045] * | 1-14 | INV. G01S7/48 G01S7/487 G01S7/497 |
| | ----- | | |
| X | DE 10 2020 215312 A1 (BOSCH GMBH ROBERT [DE]) 9. Juni 2022 (2022-06-09) * Absatz [0009] - Absatz [0030] * | 1-14 | |
| | ----- | | |

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 27. Februar 2026 | Beer, Mark |

**ANHANG ZUM EUROPÄISCHEN RECHERCHENBERICHT
ÜBER DIE EUROPÄISCHE PATENTANMELDUNG NR.**

EP 25 20 9445

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-02-2026

| Im Recherchenbericht angeführtes Patentdokument | Datum der Veröffentlichung | Mitglied(er) der Patentfamilie | Datum der Veröffentlichung |
|---|---|---|---|
| DE 102023111702 A1 | 04-04-2024 | CN 117826179 A | 05-04-2024 |
| | | DE 102023111702 A1 | 04-04-2024 |
| | | US 2024111056 A1 | 04-04-2024 |
| DE 102020215312 A1 | 09-06-2022 | CN 114609644 A | 10-06-2022 |
| | | DE 102020215312 A1 | 09-06-2022 |
| | | US 2022179077 A1 | 09-06-2022 |

EPO FORM P0461

Für nähere Einzelheiten zu diesem Anhang : siehe Amtsblatt des Europäischen Patentamts, Nr.12/82